# EUROPEAN PATENT SPECIFICATION

(11) **EP 2 091 258 B1**
(45) Date of publication and mention of the grant of the patent: **09.11.2011**
(21) Application number: 07855683.4
(22) Date of filing: 13.12.2007
(51) Int. Cl.: H04N 7/32, H04N 7/26, H04N 7/50

(54) **AN ENCODING/DECODING METHOD AND DEVICE, A FRACTIONAL PIXEL INTERPOLATION PROCESSING METHOD AND DEVICE**
VERFAHREN UND VORRICHTUNG ZUR KODIERUNG/DEKODIERUNG SOWIE VERFAHREN UND VORRICHTUNG ZUR INTEROLATION FRAKTIONALER PIXEL
PROCÉDÉ ET DISPOSITIF DE CODAGE/DÉCODAGE, ET PROCÉDÉ ET DISPOSITIF DE TRAITEMENT D'INTERPOLATION DE PIXELS FRACTIONNAIRES

(30) Priority: 05.12.2006 CN 200610162131
(43) Date of publication of application: 19.08.2009
(73) Proprietor: Huawei Technologies Co., Ltd., Shenzhen, Guangdong Province 518129 (CN)
(72) Inventor: ZHOU, Jiantong, Shenzhen Guangdong 518129 (CN); HU, Changqi, Shenzhen Guangdong 518129 (CN); XIE, Qingpeng, Shenzhen Guangdong 518129 (CN); LIN, Sixin, Shenzhen Guangdong 518129 (CN); ZENG, Pengxin, Shenzhen Guangdong 518129 (CN); XIONG, Lianhuan, Shenzhen Guangdong 518129 (CN)
(74) Representative: Körber, Martin Hans
(86) International application number: PCT/CN2007/003590
(87) International publication number: WO 2008/067734

(56) References cited:
- WO-A-2006/033084
- WO-A1-97/17801
- WO-A2-2006/033084
- CN-A- 1 207 634
- CN-A- 1 453 725
- MIYAMOTO: "Adaptive Motion Interpolation on MB-basis" JOINT VIDEO TEAM (JVT) OF ISO/IEC MPEG & ITU-T VCEG(ISO/IEC JTC1/SC29/WG11 AND ITU-T SG16 Q6), no. JVT-C040, 10 May 2002 (2002-05-10), XP030005148
- XIN LI ET AL: "New edge directed interpolation" IMAGE PROCESSING, 2000. PROCEEDINGS. 2000 INTERNATIONAL CONFERENCE ON SEPTEMBER 10-13, 2000, IEEE, PISCATAWAY, NJ, USA, 10 September 2000 (2000-09-10), pages 311-314vol.2, XP031534455 ISBN: 978-0-7803-6297-0
- WEDI T: "Adaptive interpolation filters and high-resolution displacements for video coding" IEEE TRANSACTIONS ON CIRCUITS AND SYSTEMS FOR VIDEO TECHNOLOGY, IEEE SERVICE CENTER, PISCATAWAY, NJ, US, vol. 16, no. 4, 1 April 2006 (2006-04-01), pages 484-491, XP002464225 ISSN: 1051-8215
- UGUR K ET AL: "Interpolation filters with different symmetry properties" JOINT VIDEO TEAM (JVT) OF ISO/IEC MPEG & ITU-T VCEG(ISO/IEC JTC1/SC29/WG11 AND ITU-T SG16 Q6), no. VCEG-AE21, 14 January 2007 (2007-01-14), XP030003524
- UGUR K ET AL: "Adaptive interpolation filter with flexible symmetry for coding high resolution high quality video" INTERNATIONAL CONFERENCE ON ACOUSTICS, SPEECH, AND SIGNALPROCESSING, 15 April 2007 (2007-04-15), pages I-1013, XP002454498

## Description

### FIELD OF THE INVENTION

The present invention relates to multimedia technologies, and in particular, to an inter-frame predictive encoding method, decoding method, encoding apparatus, and decoding apparatus.

### BACKGROUND OF THE INVENTION

With the development of multimedia technologies and rapid generalization of multimedia applications, the video image compression standard and techniques attract wide attention. The current video encoding standards, for example, H.26x and MPEG-x (MPEG is an abbreviation of Motion Picture Experts Group) and the video standard in the Audio Video Standard (AVS) formulated by the Audio Video codec Standard Workgroup of China, are based on a hybrid encoding framework. The hybrid encoding framework may use predictive encoding to remove time domain redundancy, use conversion encoding to remove space domain redundancy, and use entropy encoding to remove statistic redundancy.

Predictive encoding can be categorized into intra-frame predictive encoding and inter-frame predictive encoding. The inter-frame predictive encoding based on motion compensation is an important block of video encoding. Inter-frame predictive encoding reduces the time redundancy by using the motion compensation prediction technique. The motion of an object is continuous, but the digital video image is digitized discrete signals. In the video motion prediction, the sub-pixel interpolation technology is generally applied to improve accuracy of motion prediction compensation. For example, in the AVS1-P7 video encoding standard, the 1/4 pixel motion compensation prediction is applied. The 1/4 pixel interpolation process is performed in two blocks: First, 1/2 pixel interpolation is performed for the reference image, and then interpolation is performed in the horizontal and vertical directions for the original image through interpolation filters F1 and F2. After interpolation, the image is four times as large as the original image. Finally, 1/4 pixel interpolation is performed through the interpolation filter F3 to obtain a 1/4 pixel-interpolated reference image which is 16 times as large as the original image. The sub-pixel interpolation technology improves the extent of accuracy of motion prediction, and further reduces the energy of the residual image between the current encoded image and the reference image.

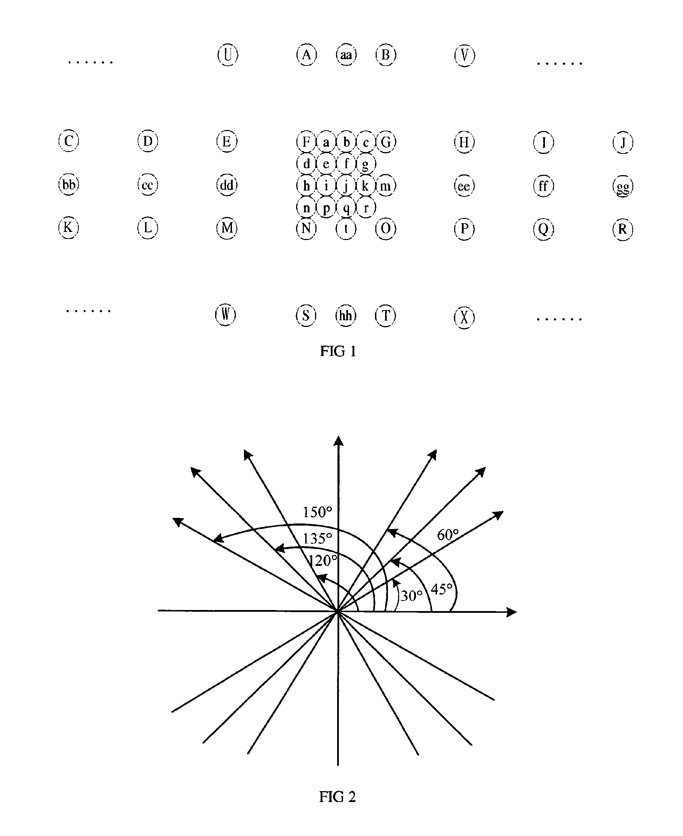

Figure 1 shows the location relations between an integer sample, a 1/2 sample, and a 1/4 sample in the existing AVS luminance interpolation standard, where the uppercase letters A-X represent the locations of the integer pixel points in the image; lowercase letters aa, b, j, t, hh, bb, cc, dd, h, m, ee, ff, and gg represent the locations of the 1/2 pixel points; and lowercase letters a, c, d, e, f, g, i, k, n, p, q, and r represent the locations of 1/4 pixel points.

In the luminance interpolation method of the AVS1-P7, the predictive value of the 1/2 sample location is calculated out through a 8-tap filter F1 (-1, 4, -12, 41, 41, -12, 4, -1)/64 in the horizontal direction and through a 4-tap filter F2 (-1, 5, 5 , -1)/8 in the vertical direction. The predictive value of the 1/4 sample location is calculated out through a linear filter F3 (1, 1)/2.

The calculation process of the 1/2 sample is as follows:
1/2 sample *b*: First, the nearest eight integer samples in the horizontal direction are filtered through a 8-tap filter F₁ to obtain an intermediate value *b*'= (-C+4D-12E+41F+41G-12H+4I-J); the final predictive value *is b* = Clip1 ((*b'* + 32) >> 6);
1/2 sample *h*: First, the nearest four integer samples in the vertical direction are filtered through F₂ to obtain an intermediate value *h* = (-*A* + 5*F* + 5*N* - *S*); the final predictive value is *h* = Clip1 ((*h* + 4) >> 3):
1/2 sample *j*: First, the final predictive value of the nearest four 1/2 samples in the vertical direction is filtered through F₂ to obtain an intermediate value *j*' = (-*aa* + 5*b* + 5*t - hh*), where *aa* = Clip1 ((*aa'* + 32) >> 6), *t =* Clip1 ((*t'* + 32) >> 6), and *hh* = Clip1 ((*hh*' + 32) >> 6). The intermediate value of the 1/2 samples marked *aa', t'* and *hh*' may be obtained through filtering in the horizontal direction by means of F₁ (which is the same as the calculation process of *b*'). The final predictive value is *j* = Clip1 ((*j*' + 4) >> 3).

The calculation process of the 1/4 sample is as follows:
1/4 sample *a*: *a* = (F + *b* + 1) >> 1, where *b* is the final predictive value of the 1/2 sample in the corresponding location and F is an integer sample value;
1/4 sample *c*: c = (G + b + 1) >> 1, where *b* is the final predictive value of the 1/2 sample in the corresponding location and G is an integer sample value;
1/4 sample *d*: d = (F + h + 1) >> 1, where *h* is the final predictive value of the 1/2 sample in the corresponding location and F is an integer sample value;
1/4 sample *n*: n = (N + h + 1) >> 1, where h is the final predictive value of the 1/2 sample in the corresponding location and N is an integer sample value;
1/4 sample i: i = (h + j + 1) >> 1, where h and j are the final predictive values of the 1/2 sample in the corresponding location;
1/4 sample k: k = (m + j + 1) >> 1, where m and j are the final predictive values of the 1/2 sample in the corresponding location;
1/4 sample f: f = (b + j + 1) >> 1, where *b* and *j* are the final predictive values of the 1/2 sample in the corresponding location;
1/4 sample *q*: q=(t + j + 1) >> 1, where t and j are the final predictive values of the 1/2 sample in the corresponding location;
1/4 samples e, g, p and r:
   e = ( F + j + 1 ) >> 1;
   g = ( G + j + 1 ) >> 1;
   p = ( N + j + 1 ) >> 1;
   r = ( O + j + 1 ) >>1;
where F, G, N, and O are integer sample values, and *j* is the final predictive value of the 1/2 sample in the corresponding location.

The 1/4 pixel interpolation process in the H.264 is similar to the AVS, and adopts a 6-tap filter F₁ (1, -5, 20, 20, -5, 1)/32, and the 1/4 pixel interpolation filter is a 2-tap filter F₂ (1, 1)/2.

In both AVS and H.264 standards, uses only the horizontal and vertical interpolation directions of the image are applied in the interpolation process. If the texture distribution of the image contents is different from that in the horizontal or vertical direction, the interpolation precision is low and the encoding rate is low.

The document with the title "Adaptive motion interpolation on MB basis" by Kei-ichi Chono and Yoshihiro Miyamoto discloses an adaptive interpolation method, which is beneficial for non-stationary statistical properties of video signals. The MB basis Adaptive Interpolation Filter (MBAIF) and its coding efficiency are based on a given set selection in pre-calculated filter-coefficients with 16-bit accuracy.

WO 2006/033084A2 discloses a diagonal interpolation scheme.

### SUMMARY OF THE INVENTION

Accordingly, an inter-frame predictive encoding method and apparatus are provided in various embodiments of the present invention to overcome the low encoding rate that occurs because only horizontal and vertical interpolation directions of the image are used in the conventional art.

To overcome the forgoing technical problems, the embodiments of the present invention includes, the following steps in a time sequential order
first prerforming sub-pixel interpolation of integer pixel samples of a complete frame according to at least two interpolation modes, , and obtaining sub-pixel reference sample values corresponding to each of the interpolation modes, wherein the sub-pixel reference samples values of at least one pixel precision have a different interpolation direction among said two interpolation modes, wherein the different interpolation deviation is not only a horizontal direction and a vertical direction whereby according to a distance between the sub-pixel to be interpolated and other samples a first number of pixel samples is selected in a sequence from a shorter distance to a longer one and, according to vertical distance from said first number of pixel samples to the straight line, afterwards a second number of pixel samples out of said first number of pixel samples is selected in a sequence from a shorter vertical distance to a longer one for the sub-pixel interpolation;
second searching location information of integer pixels corresponding to best matching reference blocks of the integer pixels among the reference frame, and searching location information of sub-pixels corresponding to best matching reference blocks of the integer pixels among the sub-pixel reference samples and third, selecting the best location information between said location information of integer pixels and said location information of sub-pixels according to image distortion, and encoding an image block to be encoded according to the best location information and the corresponding best matching reference block.

Favorably, if the best location information is the location information of a subpixel, encoding interpolation mode indication information of a sub-pixel reference sample value corresponding to the best location information into a code stream.

The method further comprises:
selecting candidate interpolation samples for each sub-pixel to be interpolated according to the distances between the sub-pixel and other samples in an order from a sample with a shorter distance to a sample with a longer distance, starting from the sample with the shortest distance; and
calculating a predictive value of the sub-pixel according to the selected interpolation samples.

The method further comprises:
selecting a number of interpolation samples for the sub-pixel according to the vertical distances between a straight line and other samples in an order from a candidate interpolation sample with a shorter vertical distance to a candidate interpolation sample with longer vertical distance, starting from the candidate interpolation sample with the shortest vertical distance, wherein said straight line is lined through the position of the sub-pixel in the interpolating direction; and
calculating a predictive value of the sub-pixel according to the selected interpolation samples.

The method further comprise:
selecting the interpolation samples at one side of the interpolation direction, or
selecting the interpolation samples respectively at both sides of the interpolation direction; wherein a side of the interpolation direction is a side of a straight line and the straight line runs through the location of a sub-pixel to be interpolated in the interpolation direction.

Favorably, the performing sub-pixel interpolation comprises:
obtaining candidate predictive value of each sub-pixel to be interpolated according to at least two set interpolation directions; and
comparing all candidate predictive values, and selecting a best value of them as a predictive value of a sub-pixel sample to be interpolated; and
selecting the integer pixel samples preferentially as the interpolation samples.

The inter-frame predictive coding and decoding (codec) solution provided in an embodiment of the present invention allows for the impact caused by the texture distribution direction of the image on the precision of the sub-pixel reference sample, and performs repeated sub-pixel interpolation for the integer pixel sample of an image block to be encoded by adjusting the interpolation direction, thus obtaining multiple groups of sub-pixel reference sample values of different precision. Afterwards, the reference sample value of the highest precision is selected among the integer pixel sample value and all the sub-pixel reference sample values, and encoding is performed according to the reference sample value of the highest precision. Compared with other sample values, the interpolation direction of the reference sample value of the highest precision is most compliant with the texture distribution features of the image block. Therefore, the difference of the reference image block located in the reference frame is minimized, thus improving the encoding rate of the encoder.

### BRIEF DESCRIPTION OF THE DRAWINGS

Figure 1 shows location relations of an integer sample, 1/2 sample, and 1/4 sample in the AVS standard;

Figure 2 shows interpolation directions in an embodiment of the present invention;

Figure 3 shows a process of selecting interpolation samples according to correlation when a 4-tap filter is used to calculate the predictive value of a 1/2 sub-pixel sample;

Figure 4 shows an inter-frame predictive encoding process at the encoder in the case of sub-pixel interpolation for the complete-frame reference image,

Figure 5 shows a structure of an encoder in the case of sub-pixel interpolation for the complete-frame reference image,

Figure 6 shows an inter-frame predictive encoding process at the encoder in the case of sub-pixel interpolation for the reference macro block in the reference frame image in an example not part of the present invention;

Figure 7 shows a structure of an encoder in the case of sub-pixet interpolation for the reference macro block in the reference frame image in an example not part of the present invention;

Figure 8 is a decoding flowchart of a decoder,

Figure 9 shows a structure of a decoder, and

Figure 10 shows a structure of a sub-pixel interpolation processing apparatus.

### DETAILED DESCRIPTION OF THE EMBODIMENTS

In order to improve the encoding rate of the encoder, the embodiments of the present invention allow for the impact caused by the texture distribution direction of the image on the precision of the sub-pixel reference sample, and perform repeated sub-pixel interpolation for the integer pixel sample of an image block to be encoded by adjusting the interpolation direction, thus obtaining multiple groups of sub-pixel reference sample values of different precision. Afterwards, the reference sample value of the highest precision is selected among the integer pixel sample value and all the sub-pixel reference sample values, and encoding is performed according to the reference sample value of highest precision. Compared with other sample values, the interpolation direction of the reference sample value of the highest precision is most compliant with the texture distribution features of the image block. Therefore, the difference of the reference image block located in the reference frame is minimized, thus improving the encoding rate of the encoder.

In the embodiments of the present invention, each time when the sub-pixel interpolation direction is adjusted, the interpolation direction of all levels of sub-pixel, or the interpolation direction of only partial or one level of sub-pixel may be adjusted. In every adjustment policy, sub-pixel reference sample values of different precision may be obtained. For example, on every occasion of sub-pixel interpolation, the interpolation direction of the 1/2 pixel is changed, and the interpolation direction of other levels of pixels remains unchanged.

The interpolation directions may be not only the horizontal direction and vertical direction, but also any other direction, for example, any direction at an angle of 30°, 45°, 60°, 120°, 135°, and 150° against the horizontal direction, as shown in Figure 2.

Any interpolation direction can be selected according to the correlation between the interpolation sample and the sub-pixel to be interpolated. The con-elation is reflected in the following two aspects:
I. If a straight line that runs through the sub-pixel to be interpolated represents the interpolation direction. the vertical distance from the interpolation sample to the straight line reflects the correlation of the texture distribution feature between the interpolation sample and the sub-pixel to be interpolated. That is, a shorter vertical distance reflects higher correlation, and a greater vertical distance reflects lower con-elation.
   Therefore, according to the first correlation factor described above, for each sub-pixel to be interpolated, a straight line that runs through the location of the sub-pixel to be interpolated may be made in the interpolation direction. According to the vertical distance from other samples to the straight line, a proper number of interpolation samples are selected in a sequence from a shorter vertical distance to a longer one, starting from the sample with the shortest vertical distance, to calculate the predictive value of the sub-pixel to be interpolated.
II. Secondly, the straight line distance between the interpolation sample and the sub-pixel to be interpolated reflects the correlation of image continuity between the interpolation sample and the sub-pixel to be interpolated. That is, a shorter straight line distance reflects higher correlation, and a greater vertical distance reflects lower correlation.
   Therefore, according to the second con-elation factor described above, for each sub-pixel to be interpolated, according to the straight line distance between the sub-pixel to be interpolated and other samples, a proper number of interpolation samples may be selected in a sequence from a shorter straight line distance to a longer one, starting from the sample with the shortest straight line distance, to calculate the predictive value of the sub-pixel to be interpolated.

The foregoing two correlation factors may be considered together. For example, for each sub-pixel to be interpolated, according to the straight line distance from the sub-pixel to be interpolated to other samples, candidate interpolation samples are selected in a sequence from a shorter straight line distance to a longer one, starting from the sample with the shortest straight line distance. Afterwards, a straight line that runs through the location of the sub-pixel to be interpolated is made in the interpolation direction. According to the vertical distance from all candidate interpolation samples to this straight line, a proper number of interpolation samples are selected in a sequence from a shorter vertical distance to a longer one, starting from the candidate interpolation sample with the shortest vertical distance, to calculate the predictive value of the sub-pixel to be interpolated.

The integer pixel samples may be selected preferentially as interpolation samples. All the selected interpolation samples may be distributed on one side of the interpolation direction, or distributed on both sides of the interpolation direction, without limiting the number of interpolation samples distributed on either side.

Nevertheless, the interpolation samples may also be selected according to other correlation factors such as image boundary feature. The method of selecting interpolation samples does not restrict the protection scope of the present invention.

According to the method of selecting interpolation samples, after the interpolation direction and interpolation filter are determined, a proper number of interpolation samples in a group may be selected for each sub-pixel to be interpolated, and the location information of the interpolation sample corresponding to each sub-pixel to be interpolated is stored in groups at the encoder and the decoder.

The present invention is hereinafter described in detail by reference to embodiments and accompanying drawings.

For ease of description, the combination of interpolation directions of each pixel in each sub-pixel interpolation is defined as an interpolation mode in an embodiment of the present invention. If more interpolation modes are set, the precision of the obtained reference sample value may be higher.

This embodiment defines the following three interpolation modes:

### I. Mode 0:

The calculation process of the 1/2 sample is as follows:
1/2 sample *b*: First, the nearest four integer samples in the horizontal direction are filtered through F₁ to obtain an intermediate value *b*□= (-E + 5F + 5G-H); the final predictive value is *b* = Clip1 ((*b* + 4) >> 3);
1/2 sample *h*: First, the nearest four integer samples in the vertical direction are filtered through F₁ to obtain an intermediate value *h* = (-*A* + 5*F* + 5*N-S*); the final predictive value is *h* = Clip1 ((*h* + 4 ) >> 3);
1/2 sample *j*: First, the intermediate value of the nearest four 1/2 samples in the horizontal or vertical direction is filtered through F₁ to obtain an intermediate value *j* = (-*dd* + 5*h* + 5*m-ee*), or *j* = (-*aa* + 5*b* + 5t-*hh*), where *aa, hh* and *t* are intermediate values of the 1/2 sample in the corresponding location, deriving from filtering in the horizontal direction through F₁; *dd, ee* and *m* are intermediate values of the 1/2 sample in the corresponding location, deriving from filtering in the vertical direction through F₁. The final predictive value is j = Clip1 ((*j* + 32) >> 6). The value deriving from filtering in the horizontal direction is the same as the value deriving from filtering in the vertical direction.

The calculation process of the 1/4 sample is as follows:
1/4 sample *a*: *a* = (F + *b* + 1) >> 1, where *b* is the final predictive value of the 1/2 sample in the corresponding location and F is an integer sample value;
1/4 sample *c*: *c* = (G + *b* + 1) >> 1, where *b* is the final predictive value of the 1/2 sample in the corresponding location and G is an integer sample value;
1/4 sample *d: d* = (F + *h* + 1) >> 1, where *h* is the final predictive value of the 1/2 sample in the corresponding location and F is an integer sample value;
1/4 sample *n*: *n* = (N + *h* + 1) >> 1, where *h* is the final predictive value of the 1/2 sample in the corresponding location and N is an integer sample value;
1/4 sample *i: i* = (*h* + *j* + 1) >> 1, where *h* and *j* are the final predictive values of the 1/2 sample in the corresponding location;
1/4 sample *k: k* = (*m* + *j* + 1) >> 1, where *m* and *j* are the final predictive values of the 1/2 sample in the corresponding location;
1/4 sample *f:f* = (*b* + *j* + 1) >> 1, where *b* and *j* are the final predictive values of the 1/2 sample in the corresponding location;
1/4 sample *q: q* = (*t* + *j* + 1) >> 1, where *t* and *j* are the final predictive values of the 1/2 sample in the corresponding location;
1/4 samples *e, g, p* and *r*:
   *e* = ( F + *j* + 1 ) >> 1;
   *g* = ( G + *j* + 1 ) >> 1;
   *p* = ( N + *j* + 1 ) >> 1;
   *r* = ( O + *j* + 1 ) >> 1;
where F, G, N and O are integer sample values, and *j* is the final predictive value of the 1/2 sample in the corresponding location.

### II. Mode 1:

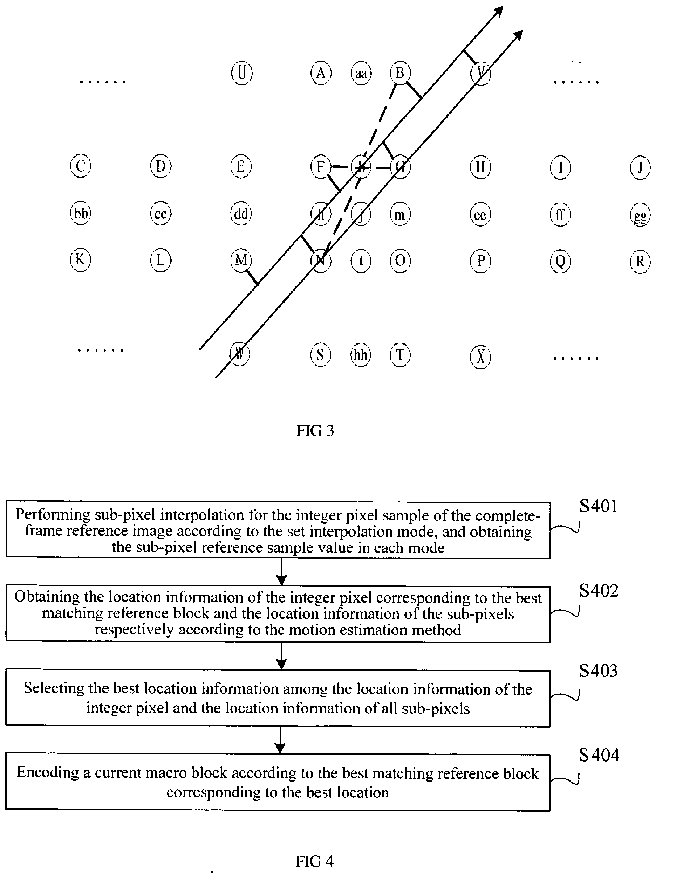

For example, as shown in Figure 3, for the 1/2 sample b, the heavy solid line represents the vertical distance between b and other samples, and the heavy dotted line represents the straight line distance between b and other samples. In the process of calculating the predictive value of the 1/2 sub-pixel sample through a 4-tap filter, the integer pixel sample is selected preferentially based on the correlation principle. In the interpolation direction at a 45° included angle against the horizontal direction, four integer pixel samples N, F, G and B may be selected as interpolation samples to calculate the predictive value of the 1/2 sample b; four integer pixel samples M, N, G and F are selected as interpolation samples to calculate the predictive value of the 1/2 sample h; four integer pixel samples W, N, G and V are selected as interpolation samples to calculate the predictive value of the 1/2 sample j. The method of selecting the interpolation sample of other 1/2 sub-pixel samples is the same.

Therefore, the calculation process of the 1/2 sample is as follows:
*b* = ( - N + 5F + 5G - B); the final predictive value *is b* = Clip1 ((*b* + 4) >> 3);
*h* = ( - *M* + 5N + 5F - G); the final predictive value is *h* = Clip1 ((*h* + 4) >> 3);
*j* = ( - W + 5N + 5G - V); the final predictive value is *j* = Clip1 ((*j* + 4) >> 3);

The calculation process of the 1/4 sample is the same as that of mode 1.

### Mode 2:

As shown in Figure 3, the integer pixel sample is selected preferentially based on the correlation principle, and the interpolation sample for calculating each 1/2 sample is selected out.

Therefore, the calculation process of the 1/2 sample is as follows:
*b* = ( - A + 5F + 5G - O); the final predictive value is *b* = Clip1 ((*b* + 4) >> 3);
*h* = ( - *E* + 5F + 5N - O); the final predictive value is *h* = Clip1 ((*h* + 4) >> 3);
*j* = ( - U + 5F + 50 - X); the final predictive value is *j* = Clip1 ((*j* + 4) >> 3);

The calculation process of the 1/4 sample is the same as that of mode 1.

After the foregoing three modes of sub-pixel interpolation are finished respectively, three groups of sub-pixel reference sample values are obtained: mode-O sample value, mode-1 sample value, and mode-2 sample value.

Based on the three groups of obtained sub-pixel reference sample values, the encoding process at the encoder is described below, taking the inter-frame predictive encoding of the macro block level of one reference frame as an example. If the image block to be encoded is a sub-block, the processing is exactly the same.

As shown in Figure 4, the sub-pixel interpolation in this embodiment is performed for the complete-frame reference image. The encoding process at the encoder includes the following blocks:

S401: Sub-pixel interpolation for the integer pixel sample of the complete-frame reference image is performed according to the set interpolation mode, and the sub-pixel reference sample value in each interpolation mode is obtained, namely, sub-pixel reference sample value of interpolation mode 0, sub-pixel reference sample value of interpolation mode 1, and sub-pixel reference sample value of interpolation mode 2.

The calculation process of each sub-pixel predictive value in the reference sample values of each interpolation mode is described above, and not repeated here any further.

S402. According to the motion estimation method, an integer pixel is searched in the reference frame, the inter-frame best matching reference block of the integer pixel is located, and the location information of the corresponding integer pixel is obtained. The location information of the integer pixel carries a group of Motion Vectors (MVs).

According to the motion estimation method, the inter-frame best matching reference block of each sub-pixel is located among reference sample values of the sub-pixel, and the location information of the corresponding sub-pixel is obtained respectively. The location information of each sub-pixel carries a best MV calculated out according to the corresponding reference sample (namely, MV₀, MV₁, and MV₂, respectively).

S403: The best location information is selected among the location information of the integer pixel and the location information of all sub-pixels.

In this embodiment, the best location information is generally selected among different interpolation precision values according to the existing image distortion, for example, according to Sum of Absolute Difference (SAD) or Rate-Distortion Optimization (RDO). The SAD criterion is a method of measuring difference between images. It is a sum of the absolute value of the location pixel differences corresponding to the image block currently to be encoded and the reference image block in the reference frame. Higher SAD values indicate higher difference between the block currently to be encoded and the reference block, and vice versa. The reference sample value corresponding to the minimum SAD value is of the highest precision.

S404. The current macro block is encoded according to the best matching reference block corresponding to the best location information, and the encoded code stream is output.

If the inter-frame best matching block is a best matching reference block of an integer pixel, the decoder needs no sub-pixel reference sample, and the code stream does not need to cany the interpolation mode indication information used by the best location information. If the inter-frame best matching block is a matching reference block of a sub-pixel, the corresponding interpolation mode indication information is recorded into the code stream for the purpose of decoding at the decoder.

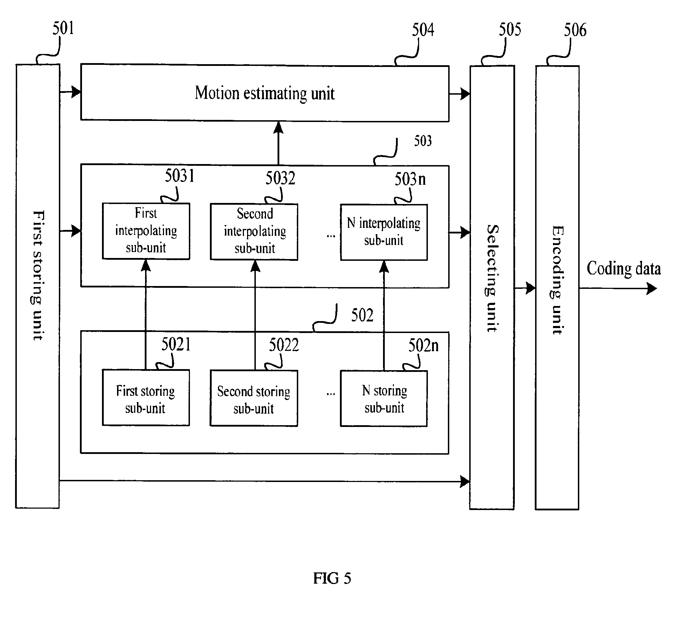

As shown in Figure 5, the structure of an encoder includes a first storing unit 501, a second storing unit 502, a sub-pixel interpolating unit 503, a motion estimating unit 504, a selecting unit 505, and an encoding unit 506.

The first storing unit 501 is adapted to buffer the image sample value of the reference frame.

The second storing unit 502 is adapted to store location information of a group of interpolation samples corresponding to each sub-pixel to be interpolated in each of at least two set interpolation modes.

Depending on the interpolation mode, the second storing unit 502 may include a proper number of storing sub-units. Each storing sub-unit stores location information of each sub-pixel interpolation sample in each interpolation mode respectively, for example, the first storing sub-unit 5021, the second storing sub-unit 5022..., the N storing sub-unit 502n, as shown in Figure 5.

The sub-pixel interpolating unit 503 is adapted to use the location information of the sub-pixel interpolation sample corresponding to the interpolation mode stored in the second storing unit 502 to interpolate the integer pixel samples buffered in the first storing unit.

Likewise, depending on the interpolation mode, the sub-pixel interpolating unit 503 may include a proper number of interpolating sub-units. Each interpolating sub-unit is used to perform sub-pixel interpolation of one interpolation mode respectively, for example, the first interpolating sub-unit 5031, the second interpolating sub-unit 5032..., and the N interpolating sub-unit 503n, as shown in Figure 5.

The motion estimating unit 504 is adapted to, according to the motion estimation method, search for an integer pixel in the reference frame, locate the inter-frame best matching reference block of the integer pixel, and obtain the location information of the corresponding integer pixel, where the location information of the integer pixel carries a group of MVs.

The motion estimating unit 504 is further adapted to, according to the motion estimation method, locate the inter-frame best matching reference block of each sub-pixel among reference sample values of each sub-pixel, and obtain the location information of the corresponding sub-pixel respectively, where the location information of each sub-pixel carries a best MV calculated out according to the corresponding reference sample (namely, MV₀, MV₁, and MV₂ respectively).

The selecting unit 505 is adapted to select the best location information.

The encoding unit 506 is adapted to encode the current macro block according to the matching reference block corresponding to the best location information selected by the selecting unit 505, and output the encoded code stream.

If the best matching reference block is a matching reference block of the integer pixel, the decoder needs no sub-pixel reference sample, and the code stream does not need to cany the interpolation mode indication information used by the best location information. If the best matching reference block is a matching reference block of a sub-pixel, the corresponding interpolation mode indication information is encoded into the code stream for the purpose of decoding at the decoder. The best location information may be carried in the macro block header informations.

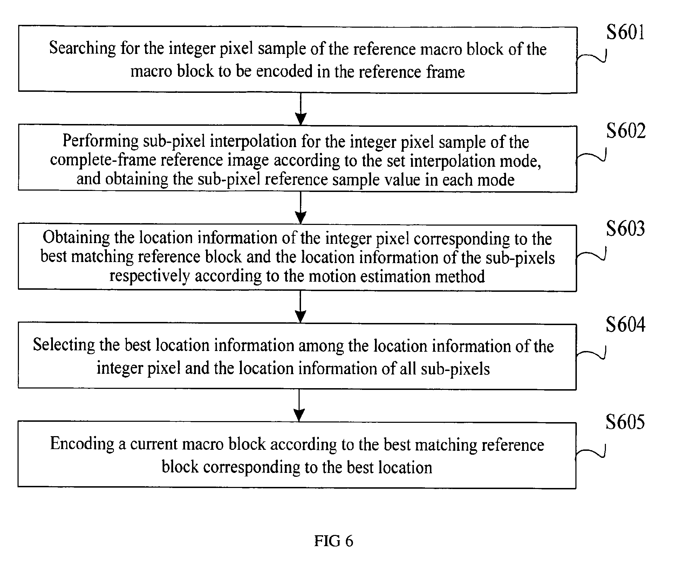

As shown in Figure 6, if sub-pixel interpolation is performed for the reference macro block in the reference frame, the encoding process at the encoder includes the following blocks.

S601: The integer pixel sample of the reference macro block of the macro block to be encoded is searched in the reference frame.

S602: Sub-pixel interpolation for the integer pixel sample of the reference macro block is performed according to the set interpolation mode, and the sub-pixel reference sample value in each interpolation mode is obtained, namely, sub-pixel reference sample value of interpolation mode 0, sub-pixel reference sample value of interpolation mode 1, and sub-pixel reference sample value of interpolation mode 2.

S603. According to the motion estimation method, searching for an integer pixel in the reference frame, the best matching reference block of the integer pixel is located, and the location information of the corresponding integer pixel is obtained. The location information of the integer pixel carries a group of Motion Vectors (MVs).

According to the motion estimation method, the best matching reference block of the sub-pixel is located among reference sample values of each sub-pixel, and the location information of the corresponding sub-pixel is obtained respectively. The location information of each sub-pixel carries a best MV calculated out according to the corresponding reference sample (namely, MV₀, MV1, and MV2 respectively).

S604: The best location information is selected among the location information of the integer pixel and the location information of all sub-pixels.

S605. The current macro block is encoded according to the reference sample value corresponding to the best location information, and the encoded code stream is output.

If the best matching block is a matching reference block of the integer pixel, the decoder needs no sub-pixel reference sample, and the code stream does not need to carry the interpolation mode indication information used by the best location information. If the best matching block is a matching reference block of a sub-pixel, the corresponding interpolation mode indication information is recorded into the code stream for the purpose of decoding at the decoder.

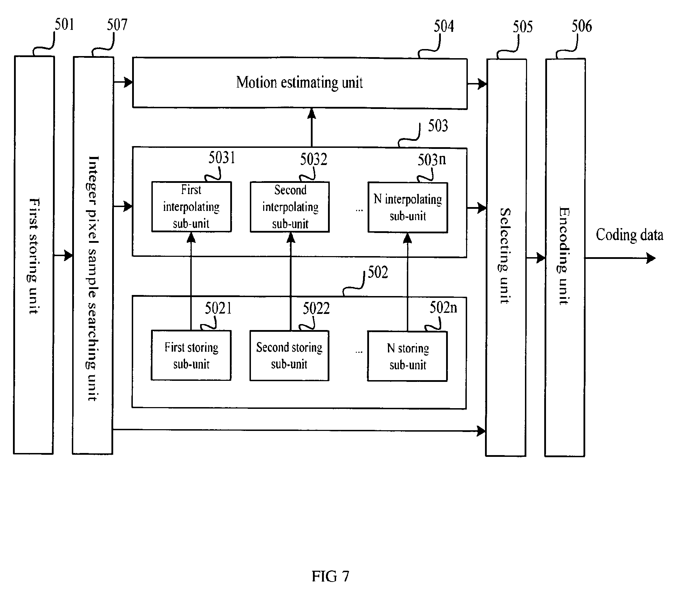

As shown in Figure 7, an alternative of the encoder structure shown in Figure 5 includes: an integer pixel sample searching unit 507, adapted to search for the integer pixel sample of the reference macro block of the macro block to be encoded among the image sample values of the reference frame stored in the first storing unit 501. The subsequent processing is based on the integer pixel sample of the reference macro block.

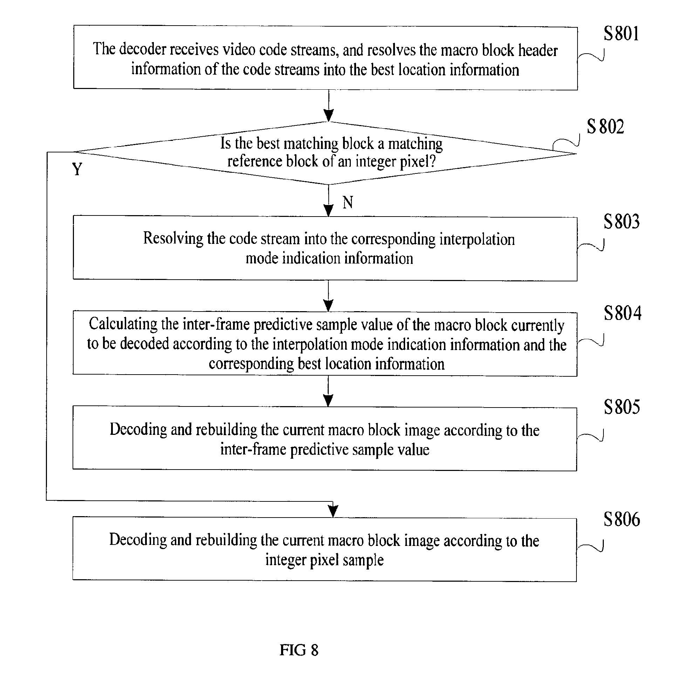

As shown in Figure 8, the process of decoding the macro block at the decoder includes the following blocks.

S801: The decoder receives video code stream, and resolves the code stream into the best location information of the best matching reference block, where the best location information may be carried in the macro block header information.

S802: According to the best location information, the decoder judges whether the inter-frame best matching reference block of the macro block is of an integer pixel level or sub-pixel level. If the inter-frame best matching reference block of the macro block to be decoded is an integer pixel matching reference block, S806 is performed to rebuild the current macro block image directly according to the integer pixel sample and the current macro block decoding is complete.

If the inter-frame best matching reference block is a sub-pixel matching reference block, the decoder performs block S803.

S803: The decoder resolves the code stream into the corresponding interpolation mode indication information.

S804: The decoder calculates the inter-frame predictive sample value of the macro block currently to be decoded according to the interpolation mode indication information and the corresponding best location information.

S805: The decoder decodes and rebuilds the current macro block image according to the inter-frame predictive sample value of the macro block currently to be decoded.

After the current macro block is decoded, if any other macro block is left to be decoded, the decoder continues to decode the next macro block.

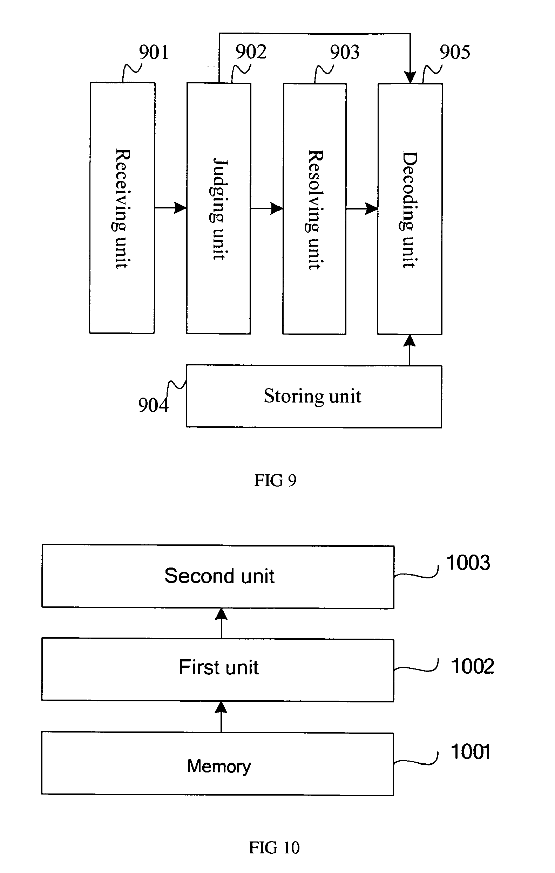

As shown in Figure 9, the structure of a decoder includes:
a receiving unit 901, adapted to receive a code stream sent by the encoder;
a judging unit 902, adapted to judge whether the inter-frame best matching block of the macro block to be decoded is of the integer pixel level or sub-pixel level, and output the judgment result;
a resolving unit 903, adapted to resolve the code stream into the corresponding interpolation mode indication information if the inter-frame best matching block of the macro block to be decoded is of the sub-pixel level;
a storing unit 904, adapted to store location information of a group of interpolation samples corresponding to each sub-pixel to be interpolated in each of the stored interpolation modes; and
a decoding unit 905, adapted to rebuild the current image block directly according to the integer pixel sample if the inter-frame best matching reference block of the macro block to be decoded is a matching reference block of an integer pixel.

Alternatively, the decoding unit 905 is adapted to:
obtain the location information of the interpolation sample from the storing unit 904 according to the interpolation mode indication information if the inter-frame best matching reference block of the macro block to be decoded is a matching reference block of a sub-pixel;
calculate the inter-frame predictive sample of the macro block currently to be decoded according to the best location information; and
decode and rebuild the current macro block according to the inter-frame predictive sample value.

Based on the same inventive conception, a sub-pixel interpolation method is provided in an embodiment of the present invention to overcome the low precision of the sub-pixel reference sample value in the conventional art, namely, at least two different interpolation directions are set for each sub-pixel to be interpolated; a group of interpolation samples correlated with the sub-pixel samples to be interpolated are selected in each interpolation direction; the corresponding predictive value of each group of interpolation samples is calculated out; among all the predictive values, the best value is selected as a best predictive value of the sub-pixel sample to be interpolated.

For each sub-pixel to be interpolated, the method of selecting interpolation samples is the same as the selection method in the encoding method described above, as exemplified below.

In the case of interpolation for the image in Figure 1, the interpolation samples may be selected differently from Figure 3 based on the foregoing interpolation principles.

Taking point b as an example, if the interpolation filter is a 4-tap interpolation filter, the calculation may be performed through the following formulas for the 45° direction:
*b* = (-M + 5F + 5G - V); the final predictive value *is b* = Clip1 ((*b* + 4) >> 3);
*b* = (-W + 5j + 5G - V); the final predictive value is *b* = Clip1 ((*b* + 4) >> 3); and
*b* = (-M + 5F + 5B - V); the final predictive value *is b* = Clip1 ((*b* + 4) >> 3).

In this case, the interpolation filter may select any other combination of coefficients, as exemplified below:
*b* = (-W + 3N + 8G - 2V); the final predictive value *is b* = Clip1 ((*b* + 4) >> 3);
*b* = (-M + 9F + 9G - V); the final predictive value *is b* = Clip1 ((*b* + 8) >> 4); and
*b* = (M + 7F + 7G + V); the final predictive value *is b* = Clip1 ((*b* + 8) >> 4).

The foregoing extension is also applicable to 6-tap and 8-tap symmetric and asymmetric interpolation filters.

The foregoing method may improve the precision of each sample predictive value, and hence improves the precision of the whole sub-pixel reference sample value. Therefore, the encoding rate is improved if the decoding is based on such a sub-pixel reference sample value.

The difference between a pixel point in the block currently to be encoded and a reference sample point in the reference block can be measured through an Absolute Difference (AD) value. Compared with the SAD criterion, the RDO criterion takes the code rate used for encoding the image into consideration in addition to the distortion extent of the image. Therefore, both the image distortion and the code rate are considered in selecting the best encoding mode in the process of encoding the current block, thus obtaining the best encoding efficiency. Nevertheless, the RDO method involves more complex calculation than the SAD method.

As shown in Figure 10, the corresponding sub-pixel interpolation processing apparatus may include the following units:
a memory 1001, adapted to store location information of a group of interpolation samples corresponding to each sub-pixel to be interpolated in each set interpolation direction;
a first unit 1002, adapted to obtain each candidate predictive value of a sub-pixel to be interpolated according to at least two set interpolation directions; and
a second unit 1003, adapted to compare all candidate predictive values obtained by the first unit 1002, and select the best value of them as a predictive value of the sub-pixel sample to be interpolated.

The sub-pixel interpolation solution under the present invention sets at least two different interpolation directions for each sub-pixel to be interpolated, calculates out the corresponding predictive value in each interpolation direction, and selects the best value among all the predictive values as a best predictive value of the sub-pixel sample to be interpolated, thus improving the precision of the sub-pixel reference sample value.

## Claims

1. An encoding method for inter-frame prediction, comprising the following steps in a time sequential order:
first performing sub-pixel interpolation of inter pixel samples of a complete reference frame according to at least two interpolation modes, and obtaining sub-pixel reference sample values corresponding to each of the interpolation modes, wherein the sub-pixel reference sample values have a different interpolation direction among said two interpolation modes, wherein the different interpolation direction is not only a horizontal direction and vertical direction,
wherein the interpolation direction defines a straight line running through a location of a sub-pixel to be interpolated, whereby according to a distance between the sub-pixel to be interpolated and other samples a first number of pixel samples is selected in a sequence from a shorter distance to a longer one and, according to a vertical distance from said first number of pixel samples to the straight line, afterwards a second number of pixels samples out of the said first number of pixel samples is selected in a sequence from a shorter vertical distance to a longer one for the sub-pixel interpolation;
second searching location information of integer pixels corresponding to best matching reference blocks of the integer pixels among the reference frame, and searching location information of sub-pixels corresponding to best matching reference blocks of the sub-pixels among the sub-pixel reference samples, and
third selecting the best location information between said location information of integer pixels and said location information of sub-pixels according to image distortion, and encoding an image block to be encoded according to the best location information and the corresponding best matching reference block.

2. The method of claim 1, wherein if the best location information is the location information of a sub-pixel, encoding interpolation mode indication information of a sub-pixel reference sample value corresponding to the best location information into a code stream.

3. The method of claim 1 or 2, further comprising:
selecting candidate interpolation samples for each sub-pixel to be interpolated according to the distances between the sub-pixel and other samples in an order from a sample with a shorter distance to a sample with a longer distance, starting from the sample with the shortest distance; and
calculating a predictive value of the sub-pixel according to the selected interpolation samples.

4. The method of claim 1, 2 or 3, further comprising:
selecting a number of interpolation samples for the sub-pixel according to the vertical distances between a straight line and other samples in an order from a candidate interpolation sample with a shorter vertical distance to a candidate interpolation sample with longer vertical distance, starting from the candidate interpolation sample with the shortest vertical distance, wherein said straight line is lined through the position of the sub-pixel in the interpolating direction; and
calculating a predictive value of the sub-pixel according to the selected interpolation samples.

5. The method of one of the claims 1 to 4, further comprising:
selecting the interpolation samples at one side of the interpolation direction, or
selecting the interpolation samples respectively at both sides of the interpolation direction;
wherein a side of the interpolation direction is a side of a straight line and the straight line runs through the location of a sub-pixel to be interpolated in the interpolation direction.

6. The method of any one of claims 1-5, wherein, the performing sub-pixel interpolation comprising:
obtaining candidate predictive value of each sub-pixel to be interpolated according to at least two set interpolation directions; and
comparing all candidate predictive values, and selecting a best value of them as a predictive value of a sub-pixel sample to be interpolated; and
selecting the integer pixel samples preferentially as the interpolation samples

## Patentansprüche

1. Codierungsverfahren zur Interframe-Prädiktion, das die folgenden Schritte in zeitsequentieller Reihenfolge umfasst:
erstens Durchführen von Subpixel-Interpolation von Inter-Pixel-Abtastwerten eines vollständigen Referenzeinzelbildes gemäß mindestens zwei Interpolationsarten und Erhalten von Subpixel-Referenzabtastwerten, die jeder der Interpolationsarten entsprechen, wobei die Subpixel-Referenzabtastwerte unter den zwei Interpolationsarten eine verschiedene Interpolationsrichtung aufweisen, wobei die verschiedene Interpolationsrichtung nicht nur eine horizontale Richtung und eine vertikale Richtung ist, wobei die Interpolationsrichtung eine durch einen Ort eines zu interpolierenden Subpixels verlaufende Gerade definiert, wodurch gemäß einer Distanz zwischen dem zu interpolierenden Subpixel und anderen Abtastwerten eine erste Anzahl von Pixel-Abtastwerten in einer Sequenz von einer kürzeren Distanz zu einer längeren ausgewählt wird und gemäß einer vertikalen Distanz von der ersten Anzahl von Pixel-Abtastwerten zu der Geraden danach eine zweite Anzahl von Pixel-Abtastwerten aus der ersten Anzahl von Pixel-Abtastwerten in einer Sequenz von einer kürzeren vertikalen Distanz zu einer längeren für die Subpixel-Interpolation ausgewählt wird;
zweitens Aussuchen von Ortsinformationen von ganzzahligen Pixeln, die am besten übereinstimmenden Referenzblöcken der ganzzahligen Pixel unter dem Referenzeinzelbild entsprechen, und Aussuchen von Ortsinformationen von Subpixeln, die am besten übereinstimmenden Referenzblöcken der Subpixel unter den Subpixel-Referenzabtastwerten entsprechen, und
drittens Auswählen der besten Ortsinformationen zwischen den Ortsinformationen ganzzahliger Pixel und den Ortsinformationen von Subpixeln gemäß Bildverzerrung und Codieren eines zu codierenden Bildblocks gemäß den besten Ortsinformationen und dem entsprechenden am besten übereinstimmenden Referenzblock.

2. Verfahren nach Anspruch 1, wobei, wenn die besten Ortsinformationen die Ortsinformationen eines Subpixels sind, Interpolationsart-Indikationsinformationen eines Subpixel-Referenzabtastwerts, die den besten Ortsinformationen entsprechen in einen Codestrom codiert werden.

3. Verfahren nach Anspruch 1 oder 2, ferner mit den folgenden Schritten:
Auswählen von in Frage kommenden Interpolationsabtastwerten für jedes zu interpolierende Subpixel gemäß den Distanzen zwischen dem Subpixel und anderen Abtastwerten in einer Reihenfolge von einem Abtastwert mit einer kürzeren Distanz zu einem Abtastwert mit einer längeren Distanz beginnend von dem Abtastwert mit der kürzesten Distanz; und
Berechnen eines prädiktiven Werts des Subpixels gemäß den ausgewählten Interpolationsabtastwerten.

4. Verfahren nach Anspruch 1, 2 oder 3, ferner mit den folgenden Schritten:
Auswählen einer Anzahl von Interpolationsabtastwerten für das Subpixel gemäß den vertikalen Distanzen zwischen einer Geraden und anderen Abtastwerten in einer Reihenfolge von einem in Frage kommenden Interpolationsabtastwert mit einer kürzeren vertikalen Distanz zu einem in Frage kommenden Interpolationsabtastwert mit längerer vertikaler Distanz beginnend von dem in Frage kommenden Interpolationsabtastwert mit der kürzesten vertikalen Distanz, wobei die Gerade durch die Position des Subpixels in der Interpolationsrichtung gelegt wird; und
Berechnen eines prädiktiven Werts des Subpixels gemäß den ausgewählten Interpolationsabtastwerten.

5. Verfahren nach einem der Ansprüche 1 bis 4, ferner mit den folgenden Schritten:
Auswählen der Interpolationsabtastwerte auf einer Seite der Interpolationsrichtung oder
Auswählen der Interpolationsabtastwerte jeweils auf beiden Seiten der Interpolationsrichtung;
wobei eine Seite der Interpolationsrichtung eine Seite einer Geraden ist und die Gerade in der Interpolationsrichtung durch den Ort eines zu interpolierenden Subpixels verläuft.

6. Verfahren nach einem der Ansprüche 1 bis 5, wobei das Durchführen der Subpixelinterpolation Folgendes umfasst:
Erhalten eines in Frage kommenden prädiktiven Werts jedes zu interpolierenden Subpixels gemäß mindestens zwei gesetzten Interpolationsrichtungen; und
Vergleichen aller in Frage kommenden prädiktiven Werte und Auswählen eines besten Werts dieser als einen prädiktiven Wert eines zu interpolierenden Subpixel-Abtastwerts; und
Auswählen der ganzzahligen Pixel-Abtastwerte vorzugweise als die Interpolationsabtastwerte.

## Revendications

1. Procédé de codage pour la prédiction inter-trame, comprenant les étapes suivantes, dans un ordre séquentiel dans le temps :
effectuer tout d'abord une interpolation de sous-pixels d'échantillons inter-pixels d'une trame de référence complète conformément à au moins deux modes d'interpolation, et obtenir des valeurs d'échantillons de référence de sous-pixels correspondant à chacun des modes d'interpolation, les valeurs d'échantillons de référence de sous-pixels ayant une direction d'interpolation différente parmi lesdits deux modes d'interpolation, la direction d'interpolation différente n'étant pas seulement une direction horizontale ou une direction verticale, la direction d'interpolation définissant une ligne droite passant par une position d'un sous-pixel à interpoler, de sorte que, selon la distance entre le sous-pixel à interpoler et d'autres échantillons, un premier nombre d'échantillons de pixels est sélectionné dans une séquence entre une distance inférieure et une distance supérieure, selon la distance verticale entre ledit premier nombre d'échantillons de pixels et la ligne droite, et qu'après cela, un second nombre d'échantillons de pixels provenant dudit premier nombre d'échantillons de pixels est sélectionné dans une séquence entre une distance verticale inférieure et une distance verticale supérieure pour l'interpolation des sous-pixels ;
rechercher en second lieu des informations de position de pixels entiers correspondant à des blocs de référence concordant le mieux des pixels entiers au sein de la trame de référence, et rechercher des informations de position de sous-pixels correspondant à des blocs de référence concordant le mieux des sous-pixels au sein des échantillons de référence de sous-pixels, et
sélectionner en troisième lieu les meilleures informations de position entre lesdites informations de position de pixels entiers et lesdites informations de position de sous-pixels en fonction de la déformation d'image, et coder un bloc d'image devant être codé conformément aux meilleures informations de position et aux blocs de référence concordant le mieux correspondants.

2. Procédé selon la revendication 1, dans lequel, si les meilleures informations de position sont les informations de position d'un sous-pixel, on code des informations d'indication de mode d'interpolation d'une valeur d'échantillon de référence d'un sous-pixel correspondant aux meilleures informations de position en un flux de code.

3. Procédé selon la revendication 1 ou 2, comprenant en outre :
la sélection d'échantillons d'interpolation candidats pour chaque sous-pixel à interpoler en fonction des distances entre le sous-pixel et d'autres échantillons dans un ordre allant d'un échantillon ayant une distance inférieure jusqu'à un échantillon ayant une distance supérieure, en partant de l'échantillon ayant la distance la plus faible ; et
le calcul d'une valeur prédictive du sous-pixel conformément aux échantillons d'interpolation sélectionnés.

4. Procédé selon la revendication 1, 2 ou 3, comprenant en outre :
la sélection d'un nombre d'échantillons d'interpolation pour le sous-pixel en fonction des distances verticales entre une ligne droite et d'autres échantillons dans un ordre allant d'un échantillon d'interpolation candidat ayant une distance verticale inférieure jusqu'à un échantillon d'interpolation candidat ayant une distance verticale supérieure, en partant de l'échantillon d'interpolation candidat ayant la distance verticale la plus faible, dans lequel ladite ligne droite est alignée sur la position du sous-pixel dans la direction d'interpolation ; et
le calcul d'une valeur prédictive du sous-pixel conformément aux échantillons d'interpolation sélectionnés.

5. Procédé selon l'une quelconque des revendications 1 à 4, comprenant en outre :
la sélection des échantillons d'interpolation d'un côté de la direction d'interpolation, ou
la sélection respective des échantillons d'interpolation des deux côtés de la direction d'interpolation ;
dans lequel un côté de la direction d'interpolation est un côté d'une ligne droite et dans lequel la ligne droite passe par la position d'un sous-pixel à interpoler dans la direction d'interpolation.

6. Procédé selon l'une quelconque des revendications 1-5, dans lequel l'exécution de l'interpolation de sous-pixels comprend :
l'obtention d'une valeur prédictive candidate de chaque sous-pixel à interpoler selon au moins deux directions d'interpolation fixées ; et
la comparaison de toutes les valeurs prédictives candidates et la sélection d'une meilleure valeur parmi celles-ci en tant que valeur prédictive d'un échantillon de sous-pixel à interpoler ; et
la sélection préférentielle des échantillons de pixels entiers en tant qu'échantillons d'interpolation.
